(19) **Europäisches Patentamt / European Patent Office / Office européen des brevets**

(11) **EP 4 331 703 A1**

(12) **EUROPEAN PATENT APPLICATION**
published in accordance with Art. 153(4) EPC

(43) Date of publication:
06.03.2024 Bulletin 2024/10

(51) International Patent Classification (IPC):
*B01D 35/02* (2006.01)     *B29B 17/00* (2006.01)
*B29B 17/02* (2006.01)

(21) Application number: 22795254.6

(22) Date of filing: 24.02.2022

(52) Cooperative Patent Classification (CPC):
**B01D 35/02; B29B 17/00; B29B 17/02;**
Y02W 30/62

(86) International application number:
**PCT/JP2022/007547**

(87) International publication number:
**WO 2022/230331 (03.11.2022 Gazette 2022/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 27.04.2021  JP 2021075066
01.10.2021  JP 2021163035

(71) Applicant: Kao Corporation
Chuo-ku
Tokyo 103-8210 (JP)

(72) Inventors:
• KISHIMOTO, Hiroaki
  Wakayama-shi, Wakayama (JP)
• MARUNO, Yuji
  Wakayama-shi, Wakayama (JP)

(74) Representative: Hoffmann Eitle
Patent- und Rechtsanwälte PartmbB
Arabellastraße 30
81925 München (DE)

(54) **METHOD FOR PRODUCING RESIN FOR RECYCLING**

(57)     A method for producing a resin for recycling including separating a resin A for recycling including subjecting a resin composition containing the resin A for recycling and a resin B having a melting point higher than that of the resin A for recycling to a filtration treatment, wherein the resin A for recycling and the resin B are thermoplastic resins, and wherein the temperature of the resin composition to be subjected to the filtration treatment is equal to or higher than the melting point of the resin A for recycling and lower than the melting point of the resin B, and wherein the opening size of the filter used in the filtration treatment is a size that inhibits passing of the resin B, the method further including increasing a size of a dispersed particle size of the resin B prior to the separating step. The resin for recycling which can be separated according to the method of the present invention can be suitably used as bottled containers and packaging materials such as refilling package (pouch), which are used in various fields such as daily sundries such as shampoos, detergents, and cosmetics, and foods.

EP 4 331 703 A1

**Description**

FIELD OF THE INVENTION

The present invention relates to a method for producing a resin for recycling.

BACKGROUND OF THE INVENTION

In many packaging materials, thermoplastic composite materials and/or laminated materials are used, which are molded into, for example, bottled containers, refilling package (pouch), and the like. For the reasons of functionality, these materials may be constituted by an entirely different kind of resin film. Accordingly, when the packaging materials made of these materials are collected and resins are recycled, materials in which a main component polymer and an incompatible polymer exist are made. For example, a polyethylene resin collected and recycled from a package contains unmolten polyamide resin and PET, and the polyamide resin and the PET form an inhomogeneous blend, thereby significantly lowering moldability of a film compared to that of a virgin polyethylene. Particularly, resins such as unmolten polyamide resin and PET are not compatible with a polyethylene resin and large in size, thereby significantly influencing the moldability.

In view of the above, a method for separating a resin for recycling from other resins, for example, includes methods described in Patent Publications 1 to 3.

Patent Publication 1: US Patent Application Publication No. 2019/0366591
Patent Publication 2: Japanese Patent Laid-Open No. 2019-6043
Patent Publication 3: Japanese Patent Laid-Open No. Hei-6-8246

SUMMARY OF THE INVENTION

The present invention relates to a method for producing a resin for recycling including

separating a resin A for recycling including subjecting a resin composition containing the resin A for recycling and a resin B having a melting point higher than that of the resin A for recycling to a filtration treatment, wherein the resin A for recycling and the resin B are thermoplastic resins, and wherein the temperature of the resin composition to be subjected to the filtration treatment is equal to or higher than the melting point of the resin A for recycling and lower than the melting point of the resin B, and
wherein the opening size of the filter used in the filtration treatment is a size that inhibits passing of the resin B,
the method further including increasing a size of a dispersed particle size of the resin B prior to the separating step.

DETAILED DESCRIPTION OF THE INVENTION

Patent Publications 1 to 3 do not describe a method for efficiently separating a thermoplastic resin from a thermoplastic resin.

The present invention relates to a method for producing a resin for recycling including efficiently separating a resin for recycling from a resin composition containing two or more kinds of thermoplastic resins.

As a result of studies in respect of the above problem, the present inventors have found that in a method of utilizing a difference in melting points of the resin when a resin composition containing two or more kinds of thermoplastic resins is filtered to separate a desired resin for recycling, the resin for recycling can be efficiently separated by increasing the dispersed particle size before filtration. The present invention has been perfected thereby.

According to the method of the present invention, a resin for recycling can be efficiently separated from the resin composition containing two or more kinds of thermoplastic resins.

The present invention is a method for producing a resin for recycling including separating a resin A for recycling including subjecting a resin composition containing the resin A for recycling and a resin B having a melting point higher than that of the resin A for recycling to a filtration treatment, the method further including a step for increasing a size of a dispersed particle size of the resin B prior to the separating step, and the method has some significant features of a temperature of the resin composition to be subjected to the filtration treatment, the opening size of the filter used in the filtration treatment, and including increasing the size of a dispersed particle size of the resin B prior to the separating step. Here, the method for producing a resin for recycling of the present invention can be said, in other words, to be a method for separating a resin for recycling.

A temperature of the resin composition is set to a temperature equal to or higher than a melting point of the resin A for recycling and lower than a melting point of the resin B when the resin composition is filtered, whereby the resin A for recycling is in a molten state and the resin B is in a granular solid state. In view of the above, a filter having an opening size that inhibits passing of the resin B that matches the dispersed particle size of the resin B is selected, so that the resin A for recycling in a molten state is selectively passed through the filter while inhibiting passing of the resin B, whereby the resin A for recycling can be efficiently separated from the other resins to be subjected to removal by separation. In addition, prior to the separating step, the size of the dispersed particle size of the resin B is increased, thereby increasing the dispersed particle size of the resin B in the resin composition to be subjected to the filtration treatment, so that passing of the resin B through the filter can be efficiently inhibited. Therefore, the resin A for recycling can be separated at higher purity.

In the present invention, the resin A for recycling and the resin B are both thermoplastic resins. The thermoplastic resin includes, but not particularly limited to, polyolefin resins, polyamide resins, polyester resins, vinyl chloride resins, styrene resins, vinyl ether resins, polyvinyl alcohol resins, polycarbonate resins, polysulfonate resins, and the like. Among them, polyolefin resins, polyamide resins, polyester resins are widely used as packaging materials. Therefore, a resin composition to be subjected to the method for production of the present invention preferably contains two or more kinds selected from the group consisting of polyolefin resins, polyamide resins, and polyester resins.

The polyolefin resins include polyethylene resins, polypropylene resins, and the like.

The polyamide resins include polycaproamide (Polyamide 6), polyhexamethylene adipamide (Polyamide 66), polycaproamide/polyhexamethylene adipamide copolymer (Polyamide 6/66), polytetramethylene adipamide (Polyamide 46), polyhexamethylene sebacamide (Polyamide 610), polyhexamethylene dodecamide (Polyamide 612), polyundecamide (Polyamide 11), polydodecamide (Polyamide 12), polyhexamethylene adipamide/polyhexamethylene terephthalamide copolymer (Polyamide 66/6T), and the like.

The polyester resins include polyethylene terephthalate (PET), polytrimethylene terephthalate (PTT), polybutylene terephthalate (PBT), polyethylene naphthalate (PEN), polybutylene naphthalate (PBN), and the like.

Among the above thermoplastic resins, a resin A for recycling to be separated by the method for production of the present invention is generally used as a main raw material for packaging material, and a polyolefin resin which is high in demand for recycling is preferred, a polyethylene resin or a polypropylene resin is more preferred, and among the polyolefin resins, a polyethylene resin with a comparatively low melting point is more preferred, a low-density polyethylene is even more preferred, and a linear low-density polyethylene is even more preferred.

The melting point of the resin A for recycling is preferably 80°C or higher, more preferably 90°C or higher, and even more preferably 100°C or higher, from the viewpoint of productivity of the separating step, and the melting point is preferably 200°C or lower, more preferably 180°C or lower, even more preferably 160°C or lower, and even more preferably 140°C or lower, from the viewpoint of a difference in melting points from the resin B.

On the other hand, as the resin B, a polyamide resin and/or a polyester resin is preferred.

The melting point of the resin B is preferably 200°C or higher, more preferably 210°C or higher, and even more preferably 220°C or higher, from the viewpoint of a difference in melting points from the resin A for recycling, and the melting point is preferably 300°C or lower, more preferably 290°C or lower, and even more preferably 280°C or lower, from the viewpoint of inhibiting deterioration of the resin A for recycling during melt-kneading. In a case where the resin B is composed of two or more kinds of resins, each resin is preferred to have a melting point defined above.

The difference in melting points of the resin A for recycling and the resin B is preferably 20°C or more, more preferably 40°C or more, even more preferably 60°C or more, and even more preferably 80°C or more, from the viewpoint of improving productivity of the separating step and purity of the resin for recycling after separation, and the difference is preferably 200°C or less, more preferably 180°C or less, even more preferably 160°C or less, even more preferably 140°C or less, even more preferably 120°C or less, and even more preferably 110°C or less, from the viewpoint of inhibiting deterioration of the resin A for recycling during melt-kneading. In a case where the resin B is composed of two or more kinds of resins, the difference in melting points of a resin having the highest melting point and the resin A for recycling is preferably within the range defined above.

The content of the resin A for recycling in the resin composition for separating the resin for recycling according to the method for production of the present invention is preferably 30% by mass or more, more preferably 40% by mass or more, even more preferably 50% by mass or more, even more preferably 60% by mass or more, and even more preferably 75% by mass or more, from the viewpoint of improving an yield in the separating step and purity of the resin for recycling after separation, and the content is preferably 99% by mass or less, more preferably 95% by mass or less, and even more preferably 90% by mass or less, from the viewpoint of easiness in separation.

On the other hand, the content of the resin B in the resin composition for separating the resin for recycling is preferably 1% by mass or more, more preferably 5% by mass or more, and even more preferably 10% by mass or more, from the viewpoint of easiness in separation, and the content is preferably 50% by mass or less, more preferably 40% by mass or less, and even more preferably 25% by mass or less, from the viewpoint of improving an yield in the separating step and purity of the resin for recycling after separation.

In addition, the content of the resin B in the resin composition, based on 100 parts by mass of the resin A for recycling, is preferably 1 part by mass or more, more preferably 5 parts by mass or more, even more preferably 10 parts by mass or more, and even more preferably 20 parts by mass or more, from the viewpoint of easiness in separation, and the content is preferably 60 parts by mass or less, more preferably 50 parts by mass or less, and even more preferably 30 parts by mass or less, from the viewpoint of improving an yield in the separating step and purity of the resin for recycling after separation.

The resin composition may contain a resin other than thermoplastic resins, for example, a thermosetting resin, a laminating agent and the like, inorganic materials such as aluminum, aluminum oxide, and silicon oxide, and an ink for printing, a pigment and other additives. The contents of the resin A for recycling and the resin B in the resin composition are preferably 80% by mass or more, more preferably 90% by mass or more, even more preferably 95% by mass or more, even more preferably 98% by mass or more, and even more preferably 100% by mass. Other additives include a plasticizer; a crystal nucleating agent; a filler including an inorganic filler and an organic filler; a hydrolysis inhibitor; a flame retardant; an antioxidant; a lubricant such as a hydrocarbon wax or an anionic surfactant; an ultraviolet absorbent; an antistatic agent; an anti-clouding agent; a photostabilizer; a pigment; a mildewproof agent; a bactericidal agent; a blowing agent; a surfactant; a polysaccharide such as starch, alginic acid, or cellulose fibers; a natural protein such as gelatin, glue, or casein; an inorganic compound such as tannin, zeolite, ceramics, or a metal powder; a perfume; a fluidity modulator; a leveling agent; an electroconductive agent; an ultraviolet dispersant; a deodorant; and the like.

For a resin composition to be used in the method for production of the present invention, for example, a used refilling package (pouch), a retort package for foods, a detergent bottle, or the like that is collected, and appropriately washed, dried, crushed down, and the like can be suitably used. The collected thermoplastic resins may be directly used in the method for production of the present invention, or molded thermoplastic resins may be prepared by molding the collected resin composition by a known method such as melt-kneading may be used.

The method for production of the present invention further includes increasing a size of a dispersed particle size of the resin B prior to the separating step.

The step for increasing a size of a dispersed particle size of the resin B includes, for example,

X: kneading the resin composition at a temperature of equal to or higher than the melting point of the resin A for recycling and lower than the melting point of the resin B,

Y: melt-kneading a mixture at a temperature higher than the melting point of the resin having the highest melting point among the resins in the mixture obtained, the mixture prepared by mixing the resin composition with a resin C which is a thermoplastic resin having a melting point higher than that of the resin A for recycling,

and the like.

In the step X, it is thought that the size of the dispersed particle size of the resin B is increased because the resin composition is sheared at a temperature equal to or higher than the melting point of the resin A for recycling and lower than the melting point of the resin B, so that crystallization by an orientation of the resin B forming a dispersed phase is induced, and further the resin B is united.

In the melt-kneading step Y, it is thought that the dispersed particle size of the resin B is increased because the resin composition is mixed with the resin C which is a thermoplastic resin having a melting point higher than that of the resin A for recycling, and the resin B is grown by supplying the resin C which can form a dispersion.

The size of the dispersed particle size of the resin B after the step of increasing a dispersed particle size of the resin B, based on the dispersed particle size of the resin B prior to the step, is preferably twice or more, more preferably ten times or more, even more preferably 100 times or more, and even more preferably 1000 times or more, from the viewpoint of improving purity of the resin composition after separation, and the size of the dispersed particle size is preferably 1000000 times or less, more preferably 100000 times or less, even more preferably 20000 times or less, from the viewpoint of productivity.

In addition, the size of the dispersed particle size of the resin B after the step of increasing a dispersed particle size of the resin B is preferably 0.005 mm or more, more preferably 0.01 mm or more, even more preferably 0.1 mm or more, and even more preferably 1 mm or more, from the viewpoint of improving purity of the resin composition after separation, and the size of the dispersed particle size is preferably 500 mm or less, more preferably 100 mm or less, and even more preferably 50 mm or less, from the same viewpoint.

From the viewpoint of improving an yield in the separating step and purity of the resin for recycling after separation, the mixing or kneading temperature in the above step X is preferably equal to or higher than a crystallization temperature $Tc_B$ of the resin B, more preferably equal to or higher than a temperature calculated from $Tc_B + 5°C$, and even more preferably equal to or higher than a temperature calculated from $Tc_B + 10°C$, and preferably lower than a melting point $Mp_B$ of the resin B, more preferably equal to or lower than a temperature calculated from $Mp_B - 5°C$, and even more preferably equal to or lower than a temperature calculated from $Mp_B - 10°C$. In a case where the resin B is composed of two or more kinds of resins, it is preferred to employ a crystallization temperature of a resin having a lowest crystallization temperature as a crystallization temperature, and to employ a melting point of a resin having a lowest melting point as a melting point, respectively.

The crystallization temperature of the resin B is preferably 170°C or higher, more preferably 180°C or higher, and even more preferably 185°C or higher, and preferably 250°C or lower, more preferably 240°C or lower, and even more preferably 230°C or lower, from the viewpoint of improving an yield in the separating step and purity of the resin for recycling after separation.

The crystallization temperature of the resin B is preferably higher than a melting point of the resin A, from the viewpoint of improving an yield in the separating step and purity of the resin for recycling after separation. The difference in the crystallization temperature of the resin B and the melting point of the resin A is preferably 1°C or more, more preferably 5°C or more, even more preferably 10°C or more, even more preferably 20°C or more, even more preferably 30°C or more, even more preferably 40°C or more, and even more preferably 50°C or more, and preferably 200°C or less, more preferably 180°C or less, even more preferably 160°C or less, and even more preferably 140°C or less.

The time of the step X is not particularly limited, so long as it is an extent that is capable of increasing the size of a dispersed particle size of the resin B, and it is desired that the time period in which the resin composition is held within the range of a kneading temperature defined above is preferably 10 seconds or more, more preferably 30 seconds or more, even more preferably 50 seconds or more, and even more preferably one minute or more, and preferably 5 minutes or less, more preferably 4 minutes or less, and even more preferably 3 minutes or less, from the viewpoint of improving an yield in the separating step and purity of the resin for recycling after separation.

From the viewpoint of melting the resin B once, it is preferable that the step X1 including melt-kneading at a temperature higher than a melting point of the resin B is carried out prior to the step X, and from the viewpoint of improving rigidity of the resin B, inhibiting deformation of the resin B in a separating step, and improving separability of the resin B, it is preferable that the step X2 including kneading at a temperature lower than the step X, preferably lower than a crystallization temperature of the resin B, is carried out after the step X, respectively.

The kneading temperature in the above melt-kneading step X1 is a temperature equal to or higher than a melting point of the resin B preferably by 5°C or more, more preferably by 10°C or more, and even more preferably by 15°C or more, from the viewpoint of melting the resin B, and a difference from the melting point of the resin B is preferably 100°C or less, more preferably 70°C or less, and even more preferably 50°C or less, from the viewpoint of reducing the environmental burdens. In a case where the resin B is composed of two or more kinds of resins, a melting point of a resin having the highest melting point is preferably within the range defined above.

In order to have the temperature of the resin composition to be subjected to the filtration treatment within a given temperature range, the mixing or kneading temperature in the above step X2 is preferably equal to or higher than a temperature calculated from the melting point $Mp_A$ of the resin A for recycling minus 10°C ($Mp_A$ - 10°C), more preferably equal to or higher than a melting point $Mp_A$ of the resin A for recycling, even more preferably equal to or higher than a temperature calculated from $Mp_A$+ 10°C, even more preferably equal to or higher than a temperature calculated from $Mp_A$ + 20°C, and even more preferably equal to or higher than a temperature calculated from $Mp_A$ + 30°C, and the mixing or kneading temperature is preferably lower than a crystallization temperature $Tc_B$ of the resin B, more preferably equal to or lower than a temperature calculated from $Tc_B$ - 10°C, even more preferably equal to or lower than a temperature calculated from $Tc_B$ - 20°C, and even more preferably equal to or lower than a temperature calculated from $Tc_B$ - 30°C. In a case where the resin B is composed of two or more kinds of resins, the crystallization temperature of the resin having the lowest crystallization temperature is preferably within the range defined above.

The step X1, the step X, and the step X2 can be carried out as a series of steps using a continuous kneader such as a single-screw or twin-screw kneader or an open-roller kneader.

The kneading temperature in the above melt-kneading step Y is preferably a temperature at which the resin B and the resin C are miscible with each other, from the viewpoint of improving an yield in the separating step and purity of the resin for recycling after separation. The kneading temperature is preferably a temperature equal to or higher than the melting point of the resin having the highest melting point among the resins in the mixture obtained by preferably 5°C or more, more preferably by 10°C or more, and even more preferably by 15°C or more. The difference in the melt-kneading temperature and the melting point of the resin having the highest melting point is preferably 100°C or less and more preferably 50°C or less.

For melt-kneading, a kneader such as a tightly closed type kneader, a single-screw or twin-screw kneader, and an open-roller kneader can be used. Among them, a twin-screw kneader is preferred.

The resin C includes resins similar to the thermoplastic resins contained in the resin composition mentioned above. The more the thermal properties approximate the resin B, and the higher the compatibility, the resin B and the resin C are unified to form granules, whereby consequently increasing a dispersed particle size of the resin B, thereby making it easily removable.

Therefore, the resin C is preferably a polyester resin and/or a polyamide resin, and more preferably a resin having a monomeric composition identical to the resin B in the same manner as in the resin B.

The difference in the melting points of the resin C and the resin A for recycling is preferably 20°C or more, more preferably 40°C or more, even more preferably 60°C or more, and even more preferably 80°C or more, from the viewpoint of improving productivity of the separating step and purity of the resin for recycling after separation, and the difference is preferably 200°C or less, more preferably 180°C or less, even more preferably 160°C or less, even more preferably 140°C or less, even more preferably 120°C or less, and even more preferably 110°C or less, from the viewpoint of inhibiting deterioration of the resin A for recycling during melt-kneading. In a case where the resin C is composed of two or more kinds of resins, it is preferable that each resin has a melting point as defined above.

In addition, the melting point of the resin C preferably approximates the melting point of the resin B, from the viewpoint of improving an yield in the separating step and purity of the resin for recycling after separation, and the difference from a melting point B of the thermoplastic resin is preferably 50°C or less and more preferably 30°C or less. In a case where the resin B is composed of two or more kinds of resins, from the viewpoint of improving an yield in the separating step and purity of the resin for recycling after separation, the melting point of the resin C is preferably equal to or lower than the melting point of the resin having the highest melting point, and the difference in a melting point of any of the resins and the melting point of the resin C is preferably within the range defined above.

It is desired that the amount of the resin C used is such that the content of the resin A for recycling in the resin composition to be subjected to the filtration treatment is, based on 100 parts by mass of a total of the resin B and the resin C, preferably 10 parts by mass or more, more preferably 20 parts by mass or more, and even more preferably 60 parts by mass or more, from the viewpoint of improving an yield in the separating step and purity of the resin for recycling after separation, and the content is preferably 300 parts by mass or less, more preferably 250 parts by mass or less, even more preferably 220 parts by mass or less, even more preferably 200 parts by mass or less, even more preferably 130 parts by mass or less, and even more preferably 90 parts by mass or less, from the viewpoint of improving an yield in the separating step and purity of the resin for recycling after separation.

In addition, it is desired that the amount of the resin C used is such that the content of the resin A for recycling in the resin composition to be subjected to the filtration treatment is preferably 10% by mass or more, more preferably 20% by mass or more, even more preferably 30% by mass or more, and even more preferably 45% by mass or more, from the viewpoint of improving an yield in the separating step and purity of the resin for recycling after separation, and the content is preferably 80% by mass or less, more preferably 70% by mass or less, and even more preferably 60% by mass or less, from the viewpoint of improving an yield in the separating step and purity of the resin for recycling after separation.

After the above melt-kneading step Y, i.e. after stopping the kneading, the resin composition may be subjected to a filtration treatment after isothermally keeping the resin composition and lowering to a given temperature, or the resin composition may be subjected to a filtration treatment after kneading the resin composition while lowering a set temperature of the kneading temperature during the course of kneading until the temperature of the resin composition is lowered to a given temperature. The former is preferred from the viewpoint of separating the resin for recycling at an even higher purity, and the latter is preferred from the viewpoint of operation efficiency.

The temperature of the resin composition to be subjected to the filtration treatment is equal to or higher than a melting point $Mp_A$ of the resin A for recycling, preferably equal to or higher than a temperature calculated from $Mp_A + 10°C$, more preferably equal to or higher than a temperature calculated from $Mp_A + 20°C$, and even more preferably equal to or higher than a temperature calculated from $Mp_A + 30°C$, and the temperature is lower than a melting point $Mp_B$ of the resin B, preferably equal to or lower than a temperature calculated from $Mp_B - 10°C$, more preferably equal to or lower than a temperature calculated from $Mp_B - 20°C$ and even more preferably equal to or lower than a temperature calculated from $Mp_B - 30°C$, from the viewpoint of improving an yield in the separating step and purity of the resin for recycling after separation. In a case where the resin B is composed of two or more kinds of resins, the melting point of the resin having the lowest melting point is preferably within the range defined above.

The resin pressure applied to the resin composition to be subjected to the filtration treatment, i.e. a resin pressure during the filtration treatment, is such that one having a resin pressure lower than a maximum stress point of the resin B or the resin B and the resin C during the filtration treatment is preferred because the resin B and the resin C during the filtration treatment can be inhibited from passing through the filter due to deformation thereof, whereby the resin A for recycling can be separated at an even higher purity. The difference in the resin pressure during the filtration treatment and the maximum stress points of the resin B or the resin B and the resin C is preferably 1 MPa or more, more preferably 2 MPa or more, and even more preferably 3 MPa or more, and preferably 20 MPa or less, more preferably 15 MPa or less, and even more preferably 10 MPa or less, from the viewpoint of improving purity of the resin for recycling after separation. In a case where the maximum stress points of the resin B and the resin C are different, the difference in the lowest maximum stress point of the resin and the resin pressure is preferably within the range defined above. Here, the resin pressure during the filtration treatment refers to a pressure applied to the resin immediately before passing through the filter, which can be measured by placing a pressure gauge. The resin pressure can be adjusted by a filter hole diameter, a filter area, a jetting rate, and a viscosity of the resin. In addition, the maximum stress point of the resin can be measured by a test method as prescribed in JIS K7171, using a flexural tester equipped with a thermostatic tank.

A filter having an opening size that inhibits passing of the resin B is used. The opening "having a size that inhibits the passing of the resin B" is preferably smaller than the maximum size of dispersed particles of the resin B contained in the resin composition to be subjected to the filtration treatment.

Specifically, when the step X is carried out as a step of increasing a size of a dispersed particle size of the resin B, the opening size of a filter, based on the maximum size of dispersed particles of the resin B, is preferably 70% or less, more preferably 20% or less, and even more preferably 10% or less, from the viewpoint of improving an yield in the separating step and purity of the resin for recycling after separation. In addition, the opening size of the filter is preferably 20 μm or more, from the viewpoint of operation efficiency.

In addition, when the step Y is carried out as a step of increasing a size of a dispersed particle size of the resin B, the opening size of a filter, based on the dispersed particle size of the resin B, is smaller in size by preferably 10 μm or more, more preferably 15 μm or more, and even more preferably 20 μm or more. Further, the opening size of the filter is preferably 20 μm or more, from the viewpoint of operation efficiency.

The filtration treatment can be carried out, for example, by placing a filter between a kneader and a die, and the filtration treatment can also be continuously carried out by using an apparatus equipped with a screen changer of a filter. An apparatus capable of continuous treatment equipped with a screen changer includes a plate-type using a metal mesh, a back flash type for back washing, a laser filter type using a flat plate or drum-shaped metal filter and a scraper, and the like.

The resin A for recycling after passing the filter can be efficiently separated and collected from a resin composition containing two or more kinds of thermoplastic resins by the filtration treatment.

The resin A for recycling separated by the method for production of the present invention can be suitably molded according to purposes and uses and recycled according to a known method. A molded article includes a film, a sheet, a fiber, a filament, an injection molded article, and the like. In order to use a resin for recycling as a raw material of a package for daily sundries, purity of the resin for recycling is preferably 85% or more, more preferably 92% or more, and more preferably 95% or more.

In addition, according to the method for production of the present invention, the resin B subjected to removal by separation, or the resin B and the resin C, can be recycled as a resin to be mixed with a resin composition when the method for production of the present invention is continuously carried out. With respect to the above-mentioned embodiments, the present invention further discloses methods for producing a resin for recycling or a method for separating a resin for recycling given below.

<1> A method for producing a resin for recycling including separating a resin A for recycling including subjecting a resin composition containing the resin A for recycling and a resin B having a melting point higher than that of the resin A for recycling to a filtration treatment, wherein the resin A for recycling and the resin B are thermoplastic resins, and wherein the temperature of the resin composition to be subjected to the filtration treatment is equal to or higher than the melting point of the resin A for recycling and lower than the melting point of the resin B, and wherein the opening size of the filter used in the filtration treatment is a size that inhibits passing of the resin B, the method further including increasing a size of a dispersed particle size of the resin B prior to the separating step.

<2> The method for producing a resin for recycling according to the above <1>, wherein a resin pressure applied to the resin composition to be subjected to the filtration treatment is lower than a maximum stress point of the resin B at the filtration treatment.

<3> The method for producing a resin for recycling according to the above <2>, wherein a difference in a resin pressure applied to the resin composition to be subjected to the filtration treatment and the maximum stress point of the resin B is 1 MPa or more, preferably 2 MPa or more, and more preferably 3 MPa or more.

<4> The method for producing a resin for recycling according to the above <2> or <3>, wherein a difference in a resin pressure applied to the resin composition to be subjected to the filtration treatment and the maximum stress point of the resin B is 20 MPa or less, preferably 15 MPa or less, and more preferably 10 MPa or less.

<5> The method for producing a resin for recycling according to any one of the above <1> to <4>, wherein the temperature of the resin composition to be subjected to the filtration treatment is equal to or higher than a temperature calculated from the melting point $Mp_A$ + 10°C of the resin A for recycling, preferably equal to or higher than a temperature calculated from $Mp_A$ + 20°C, and more preferably equal to or higher than a temperature calculated from $Mp_A$ + 30°C.

<6> The method for producing a resin for recycling according to any one of the above <1> to <5>, wherein the temperature of the resin composition to be subjected to a filtration treatment is equal to or lower than a temperature calculated from the melting point $Mp_B$ - 10°C of the resin B, preferably equal to or lower than a temperature calculated from $Mp_B$ - 20°C, and more preferably equal to or lower than a temperature calculated from $Mp_B$ - 30°C.

<7> The method for producing a resin for recycling according to any one of the above <1> to <6>, wherein the difference in melting points of the resin A for recycling and the resin B is 20°C or more, preferably 40°C or more, more preferably 60°C or more, and even more preferably 80°C or more.

<8> The method for producing a resin for recycling according to any one of the above <1> to <7>, wherein the difference in melting points of the resin A for recycling and the resin B is 200°C or less, preferably 180°C or less, more preferably 160°C or less, even more preferably 140°C or less, even more preferably 120°C or less, and even more preferably 110°C or less.

<9> The method for producing a resin for recycling according to any one of the above <1> to <8>, wherein the step of increasing a size of a dispersed particle size of the resin B includes kneading the resin composition at a temperature of equal to or higher than a melting point of the resin A for recycling, preferably equal to or higher than a crystallization temperature $Tc_B$ of the resin B, more preferably equal to or higher than a temperature calculated from $Tc_B$+ 5°C, and even more preferably equal to or higher than a temperature calculated from $Tc_B$+ 10°C.

<10> The method for producing a resin for recycling according to any one of the above <1> to <9>, wherein the step of increasing the size of a dispersed particle size of the resin B includes kneading the resin composition at a temperature of lower than a melting point $Mp_B$ of the resin B, preferably equal to or lower than a temperature calculated from $Mp_B$ - 5°C, and more preferably equal to or lower than a temperature calculated from $Mp_B$ - 10°C.

<11> The method for producing a resin for recycling according to any one of the above <1> to <10>, wherein the content of the resin B in the resin composition containing the resin A for recycling and the resin B is 1 part by mass or more, preferably 5 parts by mass or more, more preferably 10 parts by mass or more, and even more preferably 20 parts by mass or more, based on 100 parts by mass of the resin A for recycling.

<12> The method for producing a resin for recycling according to any one of the above <1> to <11>, wherein the content of the resin B in the resin composition containing the resin A for recycling and the resin B is 60 parts by mass or less, preferably 50 parts by mass or less, and more preferably 30 parts by mass or less, based on 100 parts by mass of the resin A for recycling.

<13> The method for producing a resin for recycling according to any one of the above <1> to <12>, wherein the content of the resin A for recycling in the resin composition containing the resin A for recycling and the resin B is 30% by mass or more, preferably 40% by mass or more, more preferably 50% by mass or more, even more preferably 60% by mass or more, and even more preferably 75% by mass or more.

<14> The method for producing a resin for recycling according to any one of the above <1> to <13>, wherein the content of the resin A for recycling in the resin composition containing the resin A for recycling and the resin B is 99% by mass or less, preferably 95% by mass or less, and more preferably 90% by mass or less.

<15> The method for producing a resin for recycling according to any one of the above <1> to <14>, wherein the step of increasing a size of a dispersed particle size of the resin B includes melt-kneading a mixture at a temperature higher than the melting point of the resin having the highest melting point among the resins in the mixture obtained, the mixture prepared by mixing the resin composition with a resin C which is a thermoplastic resin having a melting point higher than the resin A for recycling.

<16> The method for producing a resin for recycling according to the above < 15>, wherein the amount of the resin C used is an amount that the content of the resin A for recycling in the resin composition to be subjected to the filtration treatment is 10 parts by mass or more, preferably 20 parts by mass or more, and more preferably 60 parts by mass or more, based on 100 parts by mass of a total of the resin B and the resin C.

<17> The method for producing a resin for recycling according to the above <15> or <16>, wherein the amount of the resin C used is an amount that the content of the resin A for recycling in the resin composition to be subjected to the filtration treatment is 300 parts by mass or less, preferably 250 parts by mass or less, more preferably 220 parts by mass or less, even more preferably 200 parts by mass or less, even more preferably 130 parts by mass or less, and even more preferably 90 parts by mass or less, based on 100 parts by mass of a total of the resin B and the resin C.

<18> The method for producing a resin for recycling according to any one of the above <15> to <17>, wherein the resin B and the resin C have an identical monomer composition.

<19> The method for producing a resin for recycling according to any one of the above <1> to <18>, wherein the resin B is a polyamide resin and/or a polyester resin.

<20> The method for production according to any one of the above <1> to <19>, wherein the resin A for recycling is a polyolefin resin, preferably a polyethylene resin or a polypropylene resin, more preferably a low-density polyethylene, and even more preferably a linear low-density polyethylene.

<21> A method for producing a resin for recycling including separating a resin A for recycling including subjecting a resin composition containing the resin A for recycling and a resin B having a melting point higher than that of the resin A for recycling to a filtration treatment, wherein the resin A for recycling and the resin B are thermoplastic resins, and

wherein the temperature of the resin composition to be subjected to the filtration treatment is equal to or higher than the melting point of the resin A for recycling and lower than the melting point of the resin B, and

wherein the opening size of the filter used in the filtration treatment is a size that inhibits passing of the resin B,

the method further including increasing a size of a dispersed particle size of the resin B prior to the separating step,

wherein a resin pressure applied to the resin composition to be subjected to the filtration treatment is lower than a maximum stress point of the resin B during the filtration treatment,

wherein a difference in a resin pressure applied to the resin composition subjected to the filtration treatment and the maximum stress point of the resin B is 1 MPa or more and 20 MPa or less,

wherein the step of increasing a size of a dispersed particle size of the resin B includes kneading the resin composition at a temperature equal to or higher than the melting point of the resin A for recycling and lower than the melting point of the resin B, and

wherein the content of the resin B in the resin composition to be subjected to the step of kneading the resin composition is 1 part by mass or more and 60 parts by mass or less, based on 100 parts by mass of the resin A for recycling.

<22> A method for producing a resin for recycling including separating a resin A for recycling including subjecting a resin composition containing the resin A for recycling and a resin B having a melting point higher than that of the resin A for recycling to a filtration treatment, wherein the resin A for recycling and the resin B are thermoplastic resins, and

wherein the temperature of the resin composition to be subjected to the filtration treatment is equal to or higher than the melting point of the resin A for recycling and lower than the melting point of the resin B,

the opening size of the filter used in the filtration treatment is a size that inhibits passing of the resin B,

the method further including increasing a size of a dispersed particle size of the resin B prior to the separating step,

wherein a resin pressure applied to the resin composition to be subjected to the filtration treatment is lower than a maximum stress point of the resin B during the filtration treatment,

wherein a difference in a resin pressure applied to the resin composition subjected to the filtration treatment and the maximum stress point of the resin B is 3 MPa or more and 10 MPa or less,

wherein the step of increasing a size of a dispersed particle size of the resin B includes kneading the resin composition at a temperature equal to or higher than a crystallization temperature $Tc_B$ of the resin B and equal to or lower than a temperature calculated from $Mp_B$ - 10°C, and

wherein the content of the resin B in the resin composition to be subjected to the step of kneading the resin composition is 20 parts by mass or more and 30 parts by mass or less, based on 100 parts by mass of the resin A for recycling.

<23> A method for separating a resin for recycling including separating a resin A for recycling including subjecting a resin composition containing the resin A for recycling and a resin B having a melting point higher than that of the resin A for recycling to a filtration treatment, wherein the resin A for recycling and the resin B are thermoplastic resins, and

wherein the temperature of the resin composition to be subjected to the filtration treatment is equal to or higher than the melting point of the resin A for recycling and lower than the melting point of the resin B, and wherein the opening size of the filter used in the filtration treatment is a size that inhibits passing of the resin B,

the method further including increasing a size of a dispersed particle size of the resin B prior to the separating step.

The present invention will be described specifically hereinbelow by means of the following Examples. Here, the following Examples are mere exemplifications of the present invention, without intending to limit the present invention thereto. "Parts" in Examples are parts by mass, and "%" is % by mass, unless specified otherwise. The physical properties of the resins and the like were measured in accordance with the following methods.

[Melting Point of Thermoplastic Resin]

Using a differential scanning calorimetry instrument "DSC8500" manufactured by PerkinElmer, a 10 mg sample is weighed in a standard aluminum pan, and the temperature is raised from 25° to 280°C at a heating rate of 15°C/min. A peak top of the endothermic peak is defined as a melting point.

[Crystallization Temperature of Thermoplastic Resin]

Using a differential scanning calorimetry instrument "DSC8500" manufactured by PerkinElmer, a 10 mg sample is weighed in a standard aluminum pan, and the temperature is cooled from 280° to 15°C at a cooling rate of 15°C/min. A peak top of the exothermic peak is defined as a crystallization temperature.

[Maximum Stress Point of Thermoplastic Resin]

Using an injection molding machine J110AD-180H manufactured by The Japan Steel Works, Ltd., multipurpose test pieces each having dimensions of 80 mm × 10 mm × 4 mm are injection-molded. In a case of Ny6, the temperatures are set such that the cylinder temperatures are set at 240°C for the sections up to the fifth units from the nozzle tip side, at 200°C for the remaining one unit, and at 45°C for the section below the hopper, and a die temperature is set at 80°C. In a case of PET, the temperatures are set such that the cylinder temperatures are set at 280°C for the sections up to the fifth units from the nozzle tip side, at 240°C for the remaining one unit, and at 45°C for the section below the hopper, and a die temperature is set at 170°C. The test pieces obtained are subjected to a flexural test under the same temperature atmosphere as the resin temperature during the filtration treatment using a universal tester equipped with a thermostat manufactured by INSTRON, Model 5982, as prescribed in JIS K7171, with setting a crosshead speed to 2 mm/min, to obtain a maximum stress point.

Examples A1 to A15 and Comparative Examples A1 and A2 [Melt-Kneading Step]

Resins as shown in Tables 1 to 4 were mixed, and melt-kneaded with a twin-screw kneader manufactured by The Japan Steel Works, Ltd., TEX28V (screw diameter: 28 mm, LID = 42) at a temperature, a jetting rate, and a rotational speed as shown in Tables 1 to 4. Supposing that a full length of a kneading section of the twin-screw kneader is L,

"a first half of kneading temperature," i.e. a kneading temperature in the melt-kneading step X1, is a set temperature from upstream of the twin-screw kneader to 1/2 of L,
"an intermediary kneading temperature," i.e., a kneading temperature in the step X, is a set temperature from the terminated portion of the first half of kneading temperature to 1/3 of L, and
"a latter half of kneading temperature," i.e. a kneading temperature in the step X2, is a set temperature from the terminated portion of the intermediary of the twin-screw kneader to 1/6 of L.

The residence time and the intermediary kneading time (time for the step X) of the resin composition inside the twin-screw kneader are shown in Tables 1 to 4. The kneading time of first half, intermediary, and latter half can be calculated by multiplying the residence time of the resin composition inside the twin-screw kneader by a proportion of each part relative to a full length of the kneading section of the twin-screw kneader (first half: 1/2, intermediary: 1/3, and latter half: 1/6). For example, as in Example A1 or the like, when the residence time of the resin composition inside the twin-screw kneader was 390 seconds, i.e. 6 minutes and 30 seconds, it could be calculated such that the kneading time for the first half was 195 seconds, i.e. 3 minutes and 15 seconds, that the intermediary kneading time was 130 seconds, i.e. 2 minutes and 10 seconds, and that the kneading time for the latter half was 65 seconds, i.e. 1 minute and 5 seconds. Likewise, in the case of Example A11 (160 seconds), the intermediary kneading time could be calculated to be 53 seconds.

[Separating Step]

Metal meshes having an opening size as shown in Tables 1 to 4 were placed between the twin-screw kneader and the die, and a resin for recycling was separated from the resin composition. Here, in order to reinforce the metal meshes, three pieces of metal meshes of 40 mesh / unit of mesh as listed in Tables 1 to 4 / 40 mesh were sequentially overlaid and placed. The separation was carried out with the metal meshes until the metal meshes were clogged so that the resin pressure exceeded 8 MPa. In a case where clogging did not take place and the resin pressure did not exceed 8 MPa, a sample after two minutes from passing the resin composition through the metal meshes was evaluated.

Examples B1 to B7 and Comparative Examples B1 and B2 [Preparation of Resin Composition (1)]

A resin or resins as shown in Table 5 were melt-kneaded using a twin-screw kneader manufactured by The Japan Steel Works, Ltd., TEX28V (screw diameter: 28 mm, LID = 42) at a jetting rate of 10 kg/h, a rotational speed of 200 r/min, and a temperature as shown in Table 5, to provide a resin composition (1). No metal meshes were set between the twin-screw kneader and the die.

[Melt-Kneading Step]

A resin composition (1) obtained was mixed with resins as shown in Table 5, and the mixture was melt-kneaded using a twin-screw kneader manufactured by The Japan Steel Works, Ltd., TEX28V (screw diameter: 28 mm, LID = 42) at a jetting rate of 5 kg/h, a rotational speed of 100 r/min, and a temperature as shown in Table 5, to provide a resin composition (2). The term "a first half of kneading temperature" is a set temperature from upstream to intermediary of the twin-screw kneader, and the term "a second half of kneading temperature" is a set temperature from the intermediary to the downstream of the twin-screw kneader.

[Separating Step]

Metal meshes having an opening size as shown in Table 5 were placed between the twin-screw kneader and the die, and a resin for recycling was separated from the resin composition (2). The temperature of the resin composition subjected to a filtration treatment with the metal meshes was at an identical temperature to "a second half of kneading temperature." Here, in order to reinforce the metal meshes, five pieces of metal meshes of 40 mesh / 100 mesh / unit of mesh as listed in Table 5 / 100 mesh / 40 mesh were sequentially overlaid and placed. The separation with the metal meshes was carried out until the metal meshes were clogged and the resin pressure exceeded 8 MPa. In a case where clogging did not take place and the resin pressure did not exceed 8 MPa, a sample after 2 minutes from passing the resin composition through the metal meshes was evaluated.

Example B8

A resin composition (1) obtained in the same manner as in Example B3 was mixed with resins as shown in Table 6, and the mixture was melt-kneaded using a twin-screw kneader manufactured by The Japan Steel Works, Ltd., TEX28V (screw diameter: 28 mm, LID = 42) at a jetting rate of 5 kg/h, a rotational speed of 100 r/min, and a kneading temperature of 280°C. The resin composition was discharged from the twin-screw kneader, the rotations were then stopped, and the contents were kept inside the apparatus at 280°C for 20 minutes. Thereafter, the setting inside the apparatus was changed to 160°C, and the contents were rapidly cooled with a refrigerant. After having confirmed that the temperature of the resin composition was cooled to 160°C, the separation was carried out at a rotational speed of 100 r/min using

40 mesh / 100 mesh / 500 mesh / 100 mesh / 40 mesh. The separation with the metal meshes was carried out until the metal meshes were clogged and the resin pressure exceeded 8 MPa.

The details of the resins used in Examples and Comparative Examples are as follows.

- LLDPE: linear low-density polyethylene, manufactured by Prime Polymer Co., Ltd., Evolue SP0510, melting point: 120°C
- h-PP: homopolypropylene, manufactured by Prime Polymer Co., Ltd., F113G, melting point: 162°C
- r-PP: random polypropylene, manufactured by Prime Polymer Co., Ltd., F-730NV, melting point: 140°C
- Ny6: Nylon 6 (Polyamide 6), manufactured by UBE Industries, Inc., UBE Nylon 1022B, melting point: 225°C, crystallization temperature: 188°C
- PET: polyethylene terephthalate, manufactured by UNITIKA LTD., MA-2103, melting point: 255°C, crystallization temperature: 221°C
- Recycled resin: recycled resin composed of LLDPE (79% by mass), Ny6 (10% by mass), PET (9% by mass), and other components (2% by mass)

In accordance with the following methods, the initial maximum size of dispersed particles of the resins to be subjected to removal by separation, the maximum size of dispersed particles of the resins subjected to removal by separation during the filtration treatment, the magnification of particle size, and the purity of the resin for recycling of the separated resin composition, and the purity increase rate were measured. The results are shown in Tables 1 to 6.

[Initial Maximum Size of Dispersed Particles of Resins to Be Subjected to Removal by Separation]

A melt-kneaded product was collected from a plug arranged so that sampling could be made from a final barrel of a first half of kneading in the above melt-kneading step, and a/an (intial) size of dispersed particles (dispersion particle size) before a resin to be subjected to removal by separation entered the intermediary kneading (in Examples B1 to B8 and Comparative Examples B1 and B2, a dispersion particle size of a resin to be subjected to removal by separation in a resin composition (1)) was obtained.

A melt-kneaded product was collected, and interposed between a spacer having dimensions of 200 mm × 200 mm × 0.4 mm and a ferroplate made of iron, and a pressed sheet was produced using an autopress "Precision Molding," manufactured by TOYO SEIKI SEISAKU-SHO. Specifically, a melt-kneaded product was pressed at 160°C / 0.5 MPa for 2 minutes, and then pressed at 30°C / 0.5 MPa for 1 minute. If the pressed product had a size that could be visually judged, the size was measured on a sheet surface. If the pressed product had a size that could not be visually judged, the sheet obtained was cut into slices with a razor, and immersed in hexafluoro-2-propanol for one hour to allow elution of a resin to be subjected to removal by separation, to provide cut slices only made of a resin for recycling. The cut slices were subjected to Pt-Pb vapor deposition for 180 seconds using ion sputtering apparatus E-1030 manufactured by HITACHI, LTD., and a diameter of an impression of a resin to be subjected to removal by separation eluted from the cut slices was observed with a scanning electron microscope SEM S-4000 manufactured by HITACHI, LTD., and a maximum size of dispersed particles was calculated.

[Maximum Size of Dispersed Particles of Resin Subjected to Removal by Separation]

During the preparation of a resin composition (during the preparation of a resin composition (2) in Examples B1 to B8 and Comparative Examples B1 and B2), a mclt-kncadcd product before passing through the metal meshes was collected, and interposed with a spacer having dimensions of 200 mm × 200 mm × 0.4 mm and a ferroplate made of iron, and a pressed sheet was produced using an autopress "Precision Molding," manufactured by TOYO SEIKI SEISAKU-SHO. Specifically, a melt-kneaded product was pressed at 160°C / 0.5 MPa for 2 minutes, and then pressed at 30°C / 0.5 MPa for 1 minute. If the pressed product had a size that could be visually judged, the size was measured on a sheet surface. If the pressed product had a size that could not be visually judged, the sheet obtained was cut into slices with a razor, and immersed in hexafluoro-2-propanol for one hour to allow elution of a resin to be subjected to removal by separation, to provide cut slices only made of a resin for recycling. The cut slices were subjected to Pt-Pb vapor deposition for 180 seconds using ion sputtering apparatus E-1030 manufactured by HITACHI, LTD., and a diameter of an impression of a resin to be subjected to removal by separation eluted from the cut slices was observed with a scanning electron microscope SEM S-4000 manufactured by HITACHI, LTD., and a maximum size of dispersed particles was calculated.

[Magnification of Particle Size of Resin Subjected to Removal by Separation]

The magnification of particle size of a resin subjected to removal by separation was calculated in accordance with the following formula.

$$\text{Magnification of particle size (folds)} = \frac{\text{Maximum size of dispersed particles of resin subjected to removal by separation}}{\text{Initial maximum size of dispersed particles of resin to be subjected to removal by separation}}$$

[Purity of Resin for Recycling in the Separated Resin Composition]

A separated resin composition was immersed in hexafluoro-2-propanol for one hour to allow elution of a resin to be subjected to removal by separation, and the purity of the resin for recycling in the separated resin composition was calculated in accordance with the following formula from the changes in mass before and after the elution.

$$\text{Purity, \%} = \frac{\text{Mass, g, after elution}}{\text{Mass, g, before elution}} \times 100$$

[Increased Rate of Purity]

The increased rate of purity of the resin for recycling was calculated in accordance with the following formula.

< Examples A1 to A15 and Comparative Examples A1 and A2 >

Increased rate of purity, %

$$= \frac{\left(\begin{matrix}\text{Purity of resin for recycling, \%,}\\ \text{in the separated resin}\\ \text{composition}\end{matrix}\right) - \left(\begin{matrix}\text{Concentration of resin for}\\ \text{recycling, \%, in the resin}\\ \text{composition in the melt-}\\ \text{kneading step}\end{matrix}\right)}{\text{Concentration of resin for recycling, \%, in the resin composition (1) in the melt-kneading step}} \times 100$$

< Examples B1 to B8 and Comparative Examples B1 and B2 >

Increased rate of purity, %

$$= \frac{\left(\begin{matrix}\text{Purity of resin for recycling, \%,}\\ \text{in the separated resin}\\ \text{composition}\end{matrix}\right) - \left(\begin{matrix}\text{Concentration of resin for}\\ \text{recycling, \%, in the resin}\\ \text{composition (1)}\end{matrix}\right)}{\text{Concentration of resin for recycling, \%, in the resin composition (1)}} \times 100$$

[Table 1]

Table 1

| | | | | Unit | Ex. A1 | Ex. A2 | Comp. Ex. A1 |
|---|---|---|---|---|---|---|---|
| Melt-kneading step | Components of resin composition | Resin for recycling | LLDPE (Mp: 120°C) | % | 90 | 90 | 90 |
| | | Resin to be subjected to removal by separation | Ny6 (Mp: 225°C) | % | 10 | 10 | 10 |
| | Kneading temperature | First half of kneading temperature | | °C | 270 | 270 | 270 |
| | | Intermediary kneading temperature | | °C | 200 | 160 | 270 |
| | | Latter half of kneading temperature | | °C | 160 | 160 | 270 |
| | Kneading conditions | Jetting rate | | kg/h | 1.5 | 1.5 | 1.5 |
| | | Rotational speed of screw | | r/min | 70 | 70 | 70 |
| | Residence time of resin composition in twin-screw kneader | | | s | 390 | 390 | 390 |
| | Intermediary kneading time, time of step X | | | s | 130 | 130 | 130 |
| | Initial maximum size of dispersed particles of resin to be subjected to removal by separation | | | μm | 2 | 2 | 2 |

(continued)

| | | Unit | Ex. A1 | Ex. A2 | Comp. Ex. A1 |
|---|---|---|---|---|---|
| Separating step | Kinds of metal mesh | mesh | 100 | 100 | 100 |
| | Opening size of metal mesh | μm | 154 | 154 | 154 |
| | Maximum particle size of resin subjected to removal by separation | mm | 32 | 0.005 | 0.002 |
| | Magnification of particle size of resin subjected to removal by separation | folds | 16000 | 2.5 | 1.0 |
| | Resin temperature during filtration treatment | °C | 160 | 160 | 270 |
| | Maximum resin pressure during filtration treatment | MPa | 8 | 8 | 2 |
| | Maximum stress point of resin to be subjected to removal by separation | Ny6 | MPa | 15 | 15 | Undeterminable |
| Purity of resin for recycling in separated resin composition | | % | 99 | 91 | 90 |
| Increased rate of purity | | % | 10 | 1.1 | 0 |

[Table 2]

Table 2

| | | | Unit | Ex. A1 | Ex. A3 | Ex. A4 | Ex. A5 | Ex. A6 | Ex. A7 | Ex. A8 | Ex. A9 |
|---|---|---|---|---|---|---|---|---|---|---|---|
| Melt-kneading step | Components ofresin composition | Resin for recycling | LLDPE (Mp: 120°C) | % | 90 | 95 | 80 | 80 | 90 | 70 | 70 | - |
| | | Resin to be subjected to removal by separation | Ny6 (Mp: 225°C) | % | 10 | 5 | 20 | 10 | 5 | 15 | 20 | - |
| | | | PET (Mp: 255°C) | % | - | - | - | 10 | 5 | 15 | 10 | - |
| | | Recycled resin (LLDPE+Ny6+PET) | | % | - | - | - | - | - | - | - | 100 |
| | Kneading temperature | First half of kneading temperature | | °C | 270 | 270 | 270 | 270 | 270 | 270 | 270 | 270 |
| | | Intermediary kneading temperature | | °C | 200 | 200 | 200 | 220 | 220 | 220 | 220 | 200 |
| | | Latter half of kneading temperate | | °C | 160 | 160 | 160 | 160 | 160 | 160 | 160 | 160 |
| | Kneading conditions | Jetting rate | | kg/h | 1.5 | 1.5 | 1.5 | 1.5 | 1.5 | 1.5 | 1.5 | 1.5 |
| | | Rotational speed of screw | | r/min | 70 | 70 | 70 | 70 | 70 | 70 | 70 | 70 |
| | Residence time of resin composition in twin-screw kneader | | | S | 390 | 390 | 390 | 390 | 390 | 390 | 390 | 390 |
| | Intermediary kneading time, time of step X | | | S | 130 | 130 | 130 | 130 | 130 | 130 | 130 | 130 |
| | Initial maximum size of dispersed particles of resin to be subjected to removal by separation | | | μm | 2 | 2 | 10 | 5 | 3 | 15 | 8 | 13 |
| Separating step | Kinds of metal mesh | | | mesh | 100 | 100 | 100 | 150 | 150 | 150 | 150 | 150 |
| | Opening size of metal mesh | | | μm | 154 | 154 | 154 | 109 | 109 | 109 | 109 | 109 |
| | Maximum particle size of resin subjected to removal by separation | | | mm | 32 | 3 | 11 | 7 | 5 | 15 | 12 | 4 |
| | Magnification of particle size of resin subjected to removal by separation | | | folds | 16000 | 1500 | 1100 | 1400 | 1700 | 1000 | 1500 | 310 |
| | Resin temperature during filtration treatment | | | °C | 160 | 160 | 160 | 160 | 160 | 160 | 160 | 160 |
| | Maximum resin pressure during filtration treatment | | | MPa | 8 | 8 | 8 | 8 | 8 | 8 | 8 | 8 |
| | Maximum stress point of resin to be subjected to removal by separation | | Ny6 | MPa | 15 | 15 | 15 | 15 | 15 | 15 | 15 | 15 |
| | | | PET | MPa | - | - | - | 11 | 11 | 11 | 11 | 11 |
| Purity of resin for recycling in separated resin composition | | | | % | 99 | 99 | 98 | 91 | 93 | 87 | 99 | 98 |
| Increased rate of purity | | | | % | 10 | 4.2 | 23 | 14 | 3.3 | 24 | 42 | 24 |

EP 4 331 703 A1

[Table 3]

Table 3

| | | | | Unit | Ex. A1 | Ex. A10 | Ex. A11 |
|---|---|---|---|---|---|---|---|
| Melt-kneading step | Components of resin composition | Resin for recycling | LLDPE (Mp: 120°C) | % | 90 | 90 | 90 |
| | | Resin to be subjected to removal by separation | Ny6 (Mp: 225°C) | % | 10 | 10 | 10 |
| | Kneading temperature | First half of kneading temperature | | °C | 270 | 270 | 270 |
| | | Intermediary kneading temperature | | °C | 200 | 200 | 200 |
| | | Latter half of kneading temperature | | °C | 160 | 200 | 160 |
| | Kneading conditions | Jetting rate | | kg/h | 1.5 | 1.5 | 3 |
| | | Rotational speed of screw | | r/min | 70 | 70 | 150 |
| | Residence time of resin composition in twin-screw kneader | | | s | 390 | 390 | 160 |
| | Intermediary kneading time, time of step X | | | s | 130 | 130 | 53 |
| | Initial maximum size of dispersed particles of resin to be subjected to removal by separation | | | μm | 2 | 2 | 2 |
| Separating step | Kinds of metal mesh | | | mesh | 100 | 100 | 100 |
| | Opening size of metal mesh | | | μm | 154 | 154 | 154 |
| | Maximum particle size of resin subjected to removal by separation | | | mm | 32 | 32 | 25 |
| | Magnification of particle size of resin subjected to removal by separation | | | folds | 16000 | 16000 | 12500 |
| | Resin temperature during filtration treatment | | | °C | 160 | 200 | 160 |
| | Maximum resin pressure during filtration treatment | | | MPa | 8 | 2 | 8 |
| | Maximum stress point of resin to be subjected to removal by separation | Ny6 | | MPa | 15 | 9 | 15 |
| Purity of resin for recycling in separated resin composition | | | | % | 99 | 98 | 96 |
| Increased rate of purity | | | | % | 10 | 8.9 | 6.7 |

[Table 4]

Table 4

| | | | | Unit | Ex. A12 | Ex. A13 | Ex. A14 | Ex. A15 | Comp.Ex. A2 |
|---|---|---|---|---|---|---|---|---|---|
| Melt-kneading step | Components of resin composition | Resin for recycling | h-PP (Mp: 162°C) | % | 90 | - | 80 | - | 90 |
| | | | r-PP (Mp: 140°C) | % | - | 90 | - | 80 | - |
| | | Resin to be subjected to removal by separation | Ny6 (Mp: 225°C) | % | 10 | 10 | 10 | 10 | 10 |
| | | | PET (Mp: 255°C) | % | - | - | 10 | 10 | - |
| | Kneading temperature | First half of kneading temperature | | °C | 270 | 270 | 270 | 270 | 270 |
| | | Intermediary kneading temperature | | °C | 200 | 200 | 220 | 220 | 270 |
| | | Latter half of kneading temperature | | °C | 160 | 160 | 160 | 160 | 270 |
| | Kneading conditions | Jetting rate | | kg/h | 1.5 | 1.5 | 1.5 | 1.5 | 1.5 |
| | | Rotational speed of screw | | r/min | 70 | 70 | 70 | 70 | 70 |
| | Residence time of resin composition in twin-screw kneader | | | s | 390 | 390 | 390 | 390 | 390 |
| | Intermediary kneading time, time of step X | | | s | 130 | 130 | 130 | 130 | 130 |
| | Initial maximum size of dispersed particles of resin to be subjected to removal by separation | | | μm | 10 | 5 | 12 | 10 | 10 |
| Separating step | Kinds of metal mesh | | | mesh | 100 | 100 | 100 | 100 | 100 |
| | Opening size of metal mesh | | | μm | 154 | 154 | 154 | 154 | 154 |
| | Maximum particle size of resin subjected to removal by separation | | | mm | 24 | 22 | 6 | 5 | 0.01 |
| | Magnification of particle size of resin subjected to removal by separation | | | folds | 2400 | 4400 | 500 | 500 | 1 |
| | Resin temperature during filtration treatment | | | °C | 200 | 200 | 200 | 200 | 270 |
| | Maximum resin pressure during filtration treatment | | | MPa | 8 | 8 | 8 | 8 | 2 |
| | Maximum stress point of resin to be subjected to removal by separation | Ny6 | | MPa | 15 | 15 | 15 | 15 | Underterminable |
| | | PET | | MPa | - | - | 11 | 11 | |
| Purity of resin for recycling in separated resin composition | | | | % | 99 | 99 | 88 | 90 | 90 |
| Increased rate of purity | | | | % | 10 | 10 | 10 | 12.5 | 0 |

[Table 5]

Table 5

| | | | Unit | Ex. B1 | Ex. B2 | Ex. B3 | Ex. B4 | Ex. B5 | Ex. B6 | Ex. B7 | Comp. Ex. B1 | Comp. Ex. B2 |
|---|---|---|---|---|---|---|---|---|---|---|---|---|
| Preparation ofresin Composition (1) | Raw materials | LLDPE(Mp: 120°C) | Parts | 60 | 50 | 60 | 50 | 40 | - | - | 60 | 60 |
| | | Ny6 (Mp: 225°C) | Parts | 6.7 | 5.6 | - | - | 5.0 | - | - | 6.7 | 6.7 |
| | | PET (Mp: 255°C) | Parts | - | - | 6.7 | 5.6 | 5.0 | - | - | - | - |
| | | Recycled resin (LLDPE+Ny6+PET) | Parts | - | - | - | - | - | 50 | 40 | - | - |
| | | Content of resin for recycling (LLDPE) | % | 90 | 90 | 90 | 90 | 80 | 79 | 79 | 90 | 90 |
| | Kneading temperature | | °C | 240 | 240 | 280 | 280 | 280 | 280 | 280 | 240 | 240 |
| | Maximum size of dispersed particles of resin to be subjected to removal by separation | | $\mu$m | 3 | 3 | 1 | 1 | 4 | 12 | 12 | 3 | 3 |
| Resin to be mixed with resin composition (1) | | Ny6 | Parts | 33 | 44 | - | - | 25 | 25 | 30 | 33 | 33 |
| | | PET | Parts | - | - | 33 | 44 | 25 | 25 | 30 | - | - |
| Melt-kneading step | Components of resin composition (2) | Resin for recycling — LLDPE | % | 60 | 50 | 60 | 50 | 40 | 40 | 32 | 60 | 60 |
| | | Resin to be subjected to removal by separation — Ny6 | % | 40 | 50 | - | - | 30 | 30 | 34 | 40 | 40 |
| | | Resin to be subjected to removal by separation — PET | % | - | - | 40 | 50 | 30 | 30 | 34 | - | - |
| | Kneading temperature | First half of kneading temperature | °C | 240 | 240 | 280 | 280 | 280 | 280 | 280 | 240 | 240 |
| | | Second half of kneading temperature | °C | 160 | 160 | 160 | 160 | 160 | 160 | 160 | 240 | 160 |

| | | Unit | Ex. B1 | Ex. B2 | Ex. B3 | Ex. B4 | Ex. B5 | Ex. B6 | Ex. B7 | Comp. Ex. B1 | Comp. Ex. B2 |
|---|---|---|---|---|---|---|---|---|---|---|---|
| Filtration treatment | Resin temperature during filtration treatment | °C | 160 | 160 | 160 | 160 | 160 | 160 | 160 | 240 | 160 |
| | Kinds of metal mesh | mesh | 500 | 300 | 500 | 300 | 300 | 300 | 300 | 500 | 300 |
| | Opening size of metal mesh | μm | 26 | 45 | 26 | 45 | 45 | 45 | 45 | 26 | 45 |
| | Maximum particle size of resin subjected to removal by separation | μm | 41 | 73 | 42 | 68 | 98 | 64 | 75 | 41 | 41 |
| | Magnification of particle size of resin to be subjected to removal by separation | folds | 14 | 24 | 42 | 68 | 25 | 5 | 6 | 14 | 14 |
| | Resin pressure during filtration treatment | MPa | 8 | 8 | 8 | 8 | 8 | 8 | 8 | 3 | 5 |
| | Maximum stress point of resin to be subjected to removal by separation — Ny6 | MPa | 15 | 15 | - | - | 15 | 15 | 15 | Undeterminable | 15 |
| | Maximum stress point of resin to be subjected to removal by separation — PET | MPa | - | - | 11 | 11 | 11 | 11 | 11 | | - |
| Purity of resin for recycling in separated resin composition | | % | 95 | 97 | 95 | 97 | 97 | 97 | 97 | 60 | 60 |
| Increased rate of purity | | % | 5.6 | 7.8 | 5.6 | 7.8 | 21 | 23 | 23 | 33 | -33 |

EP 4 331 703 A1

[Table 6]

Table 6

|  |  |  | Unit | Ex. B3 | Ex. B8 |
|---|---|---|---|---|---|
| Preparation of Resin Composition (1) | Raw materials | LLDPE (Mp: 120°C) | Parts | 60 | 60 |
|  |  | PET (Mp: 255°C) | Parts | 6.7 | 6.7 |
|  |  | Content of resin for recycling (LLDPE) | % | 90 | 90 |
|  | Kneading temperature | | °C | 280 | 280 |
|  | Maximum size of dispersed particles of resin to be subjected to removal by separation | | $\mu$m | 1 | 1 |
| Resin to be mixed with resin composition (1) | PET | | Parts | 33 | 33 |
| Components of resin composition (2) | Resin for recycling | LLDPE | % | 60 | 60 |
|  | Resin to be subjected to removal by separation | PET | % | 40 | 40 |
| Filtration treatment | Resin temperature during filtration treatment | | °C | 160 | 160 |
|  | Kinds of metal mesh | | mesh | 500 | 500 |
|  | Opening size of metal mesh | | $\mu$m | 26 | 26 |
|  | Maximum particle size of resin subjected to removal by separation | | $\mu$m | 42 | 123 |
|  | Magnification of particle size of resin to be subjected to removal by separation | | folds | 42 | 123 |
|  | Resin pressure during filtration treatment | | MPa | 8 | 8 |
|  | Maximum stress point of resin to be subjected to removal by separation | PET | MPa | 11 | 11 |
| Purity of resin for recycling after separation | | | % | 95 | 98 |
| Increased rate of purity | | | % | 5.6 | 8.9 |

It can be seen from the above results that in Examples A1 to A15, a resin composition containing a resin for recycling at purity higher than the resin composition before separation can be obtained, i.e. a resin for recycling can be efficiently separated.

On the other hand, in Comparative Examples A1 and A2, the step of increasing the dispersed particle size of the resin to be subjected to removal by separation is not carried out, and the temperature of a resin composition subjected to a filtration treatment is higher than a melting point of the resin to be subjected to removal by separation. Therefore, not only a resin for recycling but also a resin to be subjected to removal by separation are in molten states, so that the resin for recycling cannot be separated when filtered.

In addition, likewise in Examples B1 to B8, it can be seen that a resin composition containing a resin for recycling at purity higher than the resin composition before separation (resin composition (1)) can be obtained, i.e. a resin for recycling can be efficiently separated.

On the other hand, in Comparative Example B 1, the temperature of the resin composition to be subjected to a filtration treatment is higher than a melting point of the resin to be subjected to removal by separation. Therefore, not only a resin for recycling but also a resin to be subjected to removal by separation are in molten states, so that the resin for recycling cannot be separated when filtered. In addition, in Comparative Example B2, since the opening size of the filter is too large, the resin which should be removed by separation passes through the filter, so that a resin for recycling cannot be separated.

The resin for recycling which can be separated according to the method of the present invention can be suitably used as bottled containers and packaging materials such as refilling package (pouch), which are used in various fields such as daily sundries such as shampoos, detergents, and cosmetics, and foods.

**Claims**

1. A method for producing a resin for recycling comprising

   separating a resin A for recycling comprising subjecting a resin composition comprising the resin A for recycling and a resin B having a melting point higher than that of the resin A for recycling to a filtration treatment, wherein the resin A for recycling and the resin B are thermoplastic resins, and wherein the temperature of the resin composition to be subjected to the filtration treatment is equal to or higher than the melting point of the resin A for recycling and lower than the melting point of the resin B, and wherein the opening size of the filter used in the filtration treatment is a size that inhibits passing of the resin B, the method further comprising increasing a size of a dispersed particle size of the resin B prior to the separating step.

2. The method for producing a resin for recycling according to claim 1, wherein a resin pressure applied to the resin composition to be subjected to the filtration treatment is lower than a maximum stress point of the resin B at the filtration treatment.

3. The method for producing a resin for recycling according to claim 2, wherein a difference in the resin pressure applied to the resin composition to be subjected to the filtration treatment and the maximum stress point of the resin B is 1 MPa or more and 20 MPa or less.

4. The method for production according to any one of claims 1 to 3, wherein the difference in the melting points of the resin A for recycling and the resin B is 20°C or higher and 200°C or lower.

5. The method for producing a resin for recycling according to any one of claims 1 to 4, wherein the step of increasing the size of a dispersed particle size of the resin B comprises kneading the resin composition at a temperature equal to or higher than the melting point of the resin A for recycling and lower than the melting point of the resin B.

6. The method for production according to any one of claims 1 to 5, wherein the step of increasing the size of a dispersed particle size of the resin B comprises kneading the resin composition at a temperature equal to or higher than a crystallization temperature of the resin B and lower than the melting point of the resin B.

7. The method for producing a resin for recycling according to any one of claims 1 to 6, wherein the content of the resin B in the resin composition comprising the resin A for recycling and the resin B is 1 part by mass or more and 60 parts by mass or less, based on 100 parts by mass of the resin A for recycling.

8. The method for producing a resin for recycling according to any one of claims 1 to 7, wherein the content of the resin A for recycling in the resin composition comprising the resin A for recycling and the resin B is 30% by mass or more and 99% by mass or less.

9. The method for producing a resin for recycling according to any one of claims 1 to 8, wherein the step of increasing the size of a dispersed particle size of the resin B comprises melt-kneading a mixture at a temperature higher than the melting point of the resin having the highest melting point among the resins in the mixture obtained, the mixture prepared by mixing the resin composition with a resin C which is a thermoplastic resin having a melting point higher than that of the resin A for recycling.

10. The method for producing a resin for recycling according to claim 9, wherein the amount of the resin C used is an amount that the content of the resin A for recycling in the resin composition to be subjected to the filtration treatment is 10 parts by mass or more and 300 parts by mass or less, based on 100 parts by mass of a total of the resin B and the resin C.

11. The method for producing a resin for recycling according to claim 9 or 10, wherein the resin B and the resin C have an identical monomer composition.

**12.** The method for producing a resin for recycling according to any one of claims 1 to 11, wherein the resin B is a polyamide resin and/or a polyester resin.

**13.** The method for production according to any one of claims 1 to 12, wherein the resin A for recycling is a polyolefin resin.

**14.** The method for production according to claim 13, wherein the polyolefin resin is a polyethylene resin or a polypropylene resin.

**15.** A method for separating a resin for recycling comprising

separating a resin A for recycling comprising subjecting a resin composition comprising the resin A for recycling and a resin B having a melting point higher than that of the resin A for recycling to a filtration treatment, wherein the resin A for recycling and the resin B are thermoplastic resins, and wherein the temperature of the resin composition to be subjected to the filtration treatment is equal to or higher than the melting point of the resin A for recycling and lower than the melting point of the resin B, and wherein the opening size of the filter used in the filtration treatment is a size that inhibits passing of the resin B, the method further comprising increasing a size of a dispersed particle size of the resin B prior to the separating step.

## INTERNATIONAL SEARCH REPORT

| International application No. |
|---|
| **PCT/JP2022/007547** |

### A. CLASSIFICATION OF SUBJECT MATTER

***B01D 35/02***(2006.01)i; ***B29B 17/00***(2006.01)i; ***B29B 17/02***(2006.01)i
FI:   B29B17/00 ZAB; B01D35/02 L; B29B17/02 ZAB

According to International Patent Classification (IPC) or to both national classification and IPC

### B. FIELDS SEARCHED

Minimum documentation searched (classification system followed by classification symbols)

B01D35/02; B29B17/00; B29B17/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | US 2021/0114335 A1 (TRANSHIELD INC.) 22 April 2021 (2021-04-22)<br>fig. 2, paragraphs [0009], [0011], [0022], [0036]-[0040], [0047], table 2, paragraph [0049], table 3 | 1-8, 12-15 |
| A | | 9-11 |
| X | JP 2019-006043 A (SHINEI KASEI KK) 17 January 2019 (2019-01-17)<br>claim 1, paragraphs [0001], [0038], [0045], [0055]-[0056] | 1 ,4-6, 12-15 |
| A | | 2-3, 7-11 |
| X | JP 2007-062070 A (JFE STEEL KK) 15 March 2007 (2007-03-15)<br>claim 1, paragraphs [0001], [0024]-[0028] | 1, 5, 13-15 |
| A | | 2-4, 6-12 |
| A | US 2019/0366591 A1 (BRASKEM S.A.) 05 December 2019 (2019-12-05)<br>entire text | 1-15 |
| A | JP 2006-205160 A (KOREA INST OF INDUSTRIAL TECHNOLOGY) 10 August 2006 (2006-08-10)<br>entire text | 1-15 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **29 March 2022** | **12 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2022/007547** |

| Patent document cited in search report | | | Publication date (day/month/year) | Patent family member(s) | | | Publication date (day/month/year) |
| --- | --- | --- | --- | --- | --- | --- | --- |
| US | 2021/0114335 | A1 | 22 April 2021 | US | 2021/0187900 | A1 | |
| JP | 2019-006043 | A | 17 January 2019 | (Family: none) | | | |
| JP | 2007-062070 | A | 15 March 2007 | (Family: none) | | | |
| US | 2019/0366591 | A1 | 05 December 2019 | WO | 2019/234511 | A1 | |
| | | | | EP | 3810387 | A1 | |
| JP | 2006-205160 | A | 10 August 2006 | US | 2006/0178442 | A1 | |
| | | | | WO | 2006/078097 | A1 | |
| | | | | EP | 1683829 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190366591
- JP 2019006043 A
- JP HEI68246 A